# EUROPÄISCHE PATENTSCHRIFT

(11) **EP 3 250 433 B1**
(45) Veröffentlichungstag und Bekanntmachung des Hinweises auf die Patenterteilung: **13.03.2019**
(21) Anmeldenummer: 16705707.4
(22) Anmeldetag: 26.01.2016
(51) Int. Cl.: B61C 15/10, B60B 39/00, B65G 53/46

(54) **SANDUNGSANLAGE MIT ZELLENRADSCHLEUSE MIT VERBESSERTEM ANTRIEB**
SANDING SYSTEM COMPRISING ROTARY FEEDER WITH IMPROVED DRIVE
INSTALLATION DE SABLAGE DOTÉE D'UN SAS À ROUE CELLULAIRE À ENTRAÎNEMENT AMÉLIORÉ

(30) Priorität: 28.01.2015 AT 500532015
(43) Veröffentlichungstag der Anmeldung: 06.12.2017
(73) Patentinhaber: Knorr-Bremse Gesellschaft mit beschränkter Haftung, 2340 Mödling (AT)
(72) Erfinder: KRISMANIC, Georg, 1020 Wien (AT); LANG, Andreas, 1050 Wien (AT); SCHNEIDER, Albert, 1020 Wien (AT)
(74) Vertreter: Aurigium Leischner & Luthe
(86) Internationale Anmeldenummer: PCT/AT2016/050012
(87) Internationale Veröffentlichungsnummer: WO 2016/118993

(56) Entgegenhaltungen:
- WO-A1-2007/031327
- WO-A1-2014/027077
- DE-A1- 4 334 231
- DE-C- 343 524
- GB-A- 214 778

## Beschreibung

Die Erfindung betrifft eine Sandungsanlage respektive eine Sandstreuanlage für ein Schienenfahrzeug, umfassend eine Zellenradschleuse mit einem Gehäuse, einem Einlass, einem Auslass, einem im Gehäuse drehbar gelagerten Zellenrad und einem Antrieb für das Zellenrad, sowie einen mit dem Einlass der Zellenradschleuse verbundenen Behalter zur Aufnahme von Bremssand oder eine mit dem Einlass der Zellenradschleuse verbundene Zuleitung zum Transport von Bremssand und eine mit dem Auslass der Zellenradschleuse verbundene Ableitung zum Abtransport von Bremssand. Schließlich betrifft die Erfindung auch ein Schienenfahrzeug mit einer solchen Sandungsanlage.

Eine Sandungsanlage sowie ein Schienenfahrzeug der genannten Art sind grundsätzlich bekannt. Generell dient eine Sandungsanlage respektive deren Zellenradschleuse dem Portionieren oder Dosieren von Bremssand. Der vor die Räder des Schienenfahrzeugs gestreute Sand erhöht die Traktion desselben beim Bremsen und Anfahren.

Beispielsweise offenbart die AT 505 783 A1 dazu ein Streugerät mit einem aus einem Sandbehälter kommenden Sandzulauf, welcher in ein rotierendes Zellenrad mündet, das mit sternförmig angeordneten Kammern zum Füllen des Sandflusses versehen ist.

Die Druckschrift WO 2007/031327 A1 offenbart eine Sandstreueinrichtung bei Hochgeschwindigkeits-Schienenfahrzeugen, bei welchen eine Dosiereinrichtung und eine Fördereinrichtung vorhanden sind. Um zu verhindern, dass ein seitliches Austragen der Sandforderung erfolgt, bilden beide Einrichtungen wohl eine Einheit, sind aber getrennt regelbar. Bei Verwendung eines Zellenrads, welches durch einen Tacho geregelt wird, besteht die Möglichkeit, eine exakte stufenlos regelbare Sandmenge bzw. Förderung zu erzielen.

Die Druckschrift DE 43 34 231 A1 offenbart eine Anlage zum Auftragen oder Aufbringen einer Beschichtung auf eine Oberfläche. Mit der Anlage kann eine insbesondere isolierende und feuerfeste Beschichtung in einer oder mehreren Schichten auf eine Oberfläche wie beispielsweise das Innere eines metallurgischen Behälters aufgebracht bzw. aufgetragen werden. Die Anlage umfasst ein Silo, das einen Abstreifer enthält, welcher um eine vertikale Achse gedreht werden kann, und das in seinem unteren Bereich eine Kammer enthält, die über Öffnungen mit dem Inneren des Silos und eines rohrförmigen Körpers zum Fördern des aufzutragenden Stoffes zu einer Sprühdüse verbunden ist. Im Inneren der Kammer wird ein Zellenrad mit senkrechter Achse in Drehung versetzt.

Generell sind bei einer Zellenradschleuse die erforderlichen Antriebsmomente sowie die Abdichtung des Antriebes bzw. der Antriebswelle problematisch.

Eine Aufgabe der Erfindung ist es daher, ein verbessertes Antriebskonzept für eine Zellenradschleuse und demzufolge eine verbesserte Sandungsanlage sowie ein verbessertes Schienenfahrzeug anzugeben. Insbesondere sollen große Antriebswellen sowie daraus resultierende Probleme mit deren Abdichtung vermieden werden.

Die Aufgabe der Erfindung wird mit einer Sandungsanlage der eingangs genannten Art gelöst, bei der die Drehmomentübertragung zwischen dem Antrieb und dem Zellenrad im Bereich eines Umfangs des Zellenrads und nicht über eine mit dem Zellenrad verbundene Welle hergestellt ist.

Weiterhin wird die Aufgabe der Erfindung durch ein Schienenfahrzeug gelöst, welche eine Sandungsanlage der oben genannten Art aufweist.

Vorteilhaft erfolgt die Drehmomentübertragung auf das Zellenrad in einem Bereich, welcher außerhalb eines Mantels eines gedachten, mit dem Zellenrad koaxialen, Zylinders liegt, dessen Durchmesser das 0,8-fache des maximalen Durchmessers des Zellenrads beträgt. Mit anderen Worten liegt der drehmomentübertragende Bereich des Zellenrads (ausschließlich) jenseits des 0,8-fachen des maximalen Durchmessers des Zellenrads. Die Drehmomentübertragung kann insbesondere über einen Ring beziehungsweise Kranz des Zellenrads erfolgen. Ist das Zellenrad mit Hilfe einer Welle drehbar gelagert, so ist diese im Wesentlichen drehmomentfrei, das heißt sie überträgt lediglich ein von den Lagerkräften herrührendes Drehmoment, sofern sie nicht mit weiteren angetriebenen Komponenten gekoppelt ist (etwa einem Aktivator oder Rührer). Die Welle kann demzufolge vergleichsweise dünn ausgeführt werden. Dadurch dass die Welle nicht zwingend aus dem Gehäuse der Zellenradschleuse herausgeführt werden muss, entfällt auch eine aufwändige Abdichtung derselben. Eine Lagerung des Zellenrads mit Hilfe einer Welle ist jedoch nicht zwingend, vorstellbar wäre zum Beispiel auch eine magnetische Lagerung. An dieser Stelle wird angemerkt, dass es sich bei einer drehmomentfreien Welle streng genommen um eine "Achse" handelt. Der Begriff "Welle" kann in den folgenden Ausführungen unter der obigen Voraussetzung daher gedanklich auch durch den Begriff "Achse" ersetzt werden.

Vorteilhafte Ausgestaltungen und Weiterbildungen der Erfindung ergeben sich aus den Unteransprüchen sowie aus der Beschreibung in Zusammenschau mit den Figuren.

In einer vorteilhaften Ausführungsform weist die Zellenradschleuse einen auf dem Zellenrad umfangsseitig angeordneten Zahnkranz auf, welcher mit einem Antriebselement des Antriebs aus der Gruppe Stirnzahnrad, Kegelzahnrad, Kronenrad, Schnecke, Spiralrad eines Torus-Getriebes (erhältlich bei der Firma Tedec AG, http://torus-gear.com), Kette oder Zahnriemen zusammenwirkt. Das heißt, ein motorisch angetriebenes Antriebselement greift direkt umfangsseitig in einen Zahnkranz des Zellenrads ein. Durch die formschlüssige Kraftübertragung gelingt der Antrieb des Zellenrads besonders gut. Das Torus-Getriebe eignet sich unter anderem auch deswegen sehr gut für den Einsatz in einer Sandungsanlage eines Schienenfahrzeugs, weil die Motorwelle normal auf die Welle des Zellenrads liegt und zu dieser nur geringen seitlichen Versatz aufweist. Demzufolge kann der Motor respektive dessen Achse insbesondere in Fahrtrichtung des Schienenfahrzeugs ausgerichtet werden. In der Regel sind die Einbauverhältnisse in dieser Dimension nicht so beengt wie in der Vertikalen oder auch zur Mitte des Schienenfahrzeugs hin, sodass der Einbau der Sandungsanlage in ein Schienenfahrzeug auf die vorgeschlagene Weise leichter gelingt als bei bekannten Anordnungen. Insbesondere kann der Motor dabei in Fahrtrichtung des Schienenfahrzeugs hinter der Zellenradschleuse angeordnet sein, sodass dieser gut vor Umwelteinflüssen geschützt ist. Zudem ermöglicht das Torus-Getriebe hohe Übersetzungen, sodass auf weitere Getriebestufen unter Umständen verzichtet werden kann. Schließlich kann mit dem Torus-Getriebe auch ein sehr energieeffizienter Antrieb für das Zellenrad realisiert werden.

Vorteilhaft ist es aber auch, wenn die Zellenradschleuse einen auf dem Zellenrad umfangsseitig angeordneten Reibkranz aufweist, welcher mit einem Reibrad oder (Reib)Riemen des Antriebs, insbesondere aus der Gruppe Flachriemen, Rundriemen, Keilriemen oder Keilrippenriemen, zusammenwirkt. Auf diese Weise können Probleme vermieden werden, wenn der Bremssand in das Getriebe gerät, da Reibgetriebe in dieser Hinsicht vergleichsweise robust sind. In einer besonderen Ausführungsform kann der Bremssand sogar gezielt in das Reibgetriebe eingebracht werden, um die Kraftübertragung zwischen den Getrieberädern zu verbessern. Dazu kann eine Hilfsleitung vorgesehen werden, welche vom Sandbehälter respektive einer Zuleitung/Ableitung für den Bremssand zu einem Reibgetriebe zwischen Antrieb und Zellenrad führt.

In einer besonders vorteilhaften Ausführungsform der Zellenradschleuse erfolgt die Drehmomentübertragung zwischen Antrieb und Zellenrad kontaktlos, insbesondere magnetisch beziehungsweise elektromagnetisch, durch das Gehäuse hindurch. Auf diese Weise kann Bremssand vom Antrieb praktisch gänzlich ferngehalten werden. Erfolgt die Drehmomentübertragung magnetisch oder elektromagnetisch, so sollte das Gehäuse wenigstens im Bereich der Drehmomentübertragung aus einem magentisch nicht oder nur leicht leitfähigem Material bestehen, beispielsweise aus Kunststoff oder Keramik. Denkbar wäre insbesondere auch der Einsatz eines Verbundwerkstoffes. Beispielsweise können keramische Teilchen in einer Matrix aus Kunststoff eingebettet sein. Das Gehäuse ist dadurch einerseits sehr widerstandsfähig gegen Abrieb, andererseits aber auch schlagzäh. Auch das Zellenrad kann aus den genannten Materialien bestehen . Zudem kann das Zellenrad metallische und/oder ferromagnetische Bauteile zur Leitung und/oder Interaktion mit dem Magnetfeld umfassen, die insbesondere in das zuvor genannte Material eingebettet sind.

In einer weiteren besonders vorteilhaften Ausführungsform umfasst die Zellenradschleuse einen drehbar gelagerten Zahnkranz oder ein drehbar gelagertes Zahnrad, der/das durch das Gehäuse hindurch magnetisch/elektromagnetisch mit dem Zellenrad gekoppelt ist und mit einem Antriebselement des Antriebs aus der Gruppe Stirnzahnrad, Kegelzahnrad, Kronenrad, Schnecke, Spiralrad eines Torus-Getriebes, Kette oder Zahnriemen zusammenwirkt. Bei dieser Ausführungsform wird ein außerhalb des Gehäuses angeordneter, drehbar gelagerter Zahnkranz oder ein außerhalb des Gehäuses angeordnetes, drehbar gelagertes Zahnrad motorisch angetrieben. Durch magnetische/elektromagnetische Kopplung mit dem Zellenrad wird die Drehbewegung des Zahnkranzes/Zahnrads durch das Gehäuse hindurch kontaktlos auf das Zellenrad übertragen. Beispielsweise können für die genannte Kopplung Permanentmagnete oder Elektromagnete eingesetzt werden. Denkbar ist auch, dass auf dem Zellenrad ein Kurzschlusskäfig angeordnet ist, in dem Kurzschlussströme durch das magnetische/elektromagnetische Drehfeld induziert werden, die wiederum ein elektromagnetisches Feld erzeugen, das mit dem genannten Drehfeld interagiert. Solcherart kann die Drehbewegung asynchron auf das Zellenrad übertragen werden.

Eine günstige Ausführungsform der Zellenradschleuse ist auch gegeben, wenn
- das Antriebselement als ein- oder mehrgängige Schnecke oder ein- oder mehrgängiges Spiralrad eines Torus-Getriebes ausgebildet ist und
- der Gang/die Gänge (der Zahn/die Zähne) der Schnecke/des Spiralrads und/oder die Zähne des Zahnkranzes je einen Endabschnitt aus einem Elastomer aufweisen, dessen Querschnitt im Vergleich zum Rest des jeweiligen Gangs/Zahns vergrößert ist.
Bei den genannten Getrieben kommt es nicht nur zu einer Wälzbewegung wie zum Beispiel bei einem Stirnradgetriebe, sondern auch zu einer dazu quer verlaufenden Scher- oder Schleifbewegung. Mit Hilfe des Elastomerbereichs wird diese Scher- oder Schleifbewegung dazu ausgenutzt, um die Zähne des Getriebes zu säubern und damit dessen Standzeit zu erhöhen. Die Gänge/die Zähne im Elastomerbereich können beispielsweise aus Gummi oder Silikonkautschuk bestehen, im restlichen Bereich in an sich bekannter Weise aus Metall oder Kunststoff (z.B. Polyamid), um die erforderlichen Kräfte übertragen zu können.

In einer weiteren besonders vorteilhaften Ausführungsform umfasst die Zellenradschleuse einen drehbar gelagerten Reibkranz oder ein drehbar gelagertes Reibrad der/das durch das Gehäuse hindurch magnetisch mit dem Zellenrad gekoppelt ist und mit einem Reibrad oder Riemen des Antriebs, insbesondere aus der Gruppe Flachriemen, Rundriemen, Keilriemen oder Keilrippenriemen, zusammenwirkt. Ähnlich wie bei der Ausführungsform mit dem außerhalb des Gehäuses angeordneten, drehbar gelagerten Zahnkranz/Zahnrad wird bei dieser Variante ein außerhalb des Gehäuses angeordneter, drehbar gelagerter Reibkranz oder ein außerhalb des Gehäuses angeordnetes, drehbar gelagertes Reibrad motorisch angetrieben. Das hinsichtlich der kontaktlosen Kraftübertragung in Bezug auf den außenliegenden Zahnkranz/Zahnrad Gesagte gilt sinngemäß auch für den außenliegenden Reibkranz / das außenliegende Reibrad.

Günstig ist es auch, wenn das mit dem Antrieb gekoppelte Stirnzahnrad/Reibrad als Rad eines Planetengetriebes ausgebildet ist. Auf diese Weise kann ein Antriebsmotor koaxial zum Zellenrad angeordnet werden.

In einer weiteren günstigen Ausführungsform der Zellenradschleuse ist der Antrieb in einem Hohlraum angeordnet, welcher einen Druckluftanschluss aufweist. Im Betrieb wird der Hohlraum druckluftbeaufschlagt, sodass der Luftdruck in diesem höher ist als in den Zellen des Zellenrads. Auf diese Weise wird vermieden oder zumindest erschwert, dass Bremssand zum Getriebe gelangt. Vorteilhaft kann diese Druckluft auch zum Austragen von Bremssand aus dem Zellenrad sowie zum Weitertransport desselben über ein Abführrohr verwendet werden.

Generell ist es von Vorteil, wenn auf dem Zellenrad umfangsseitig Mittel zur Erzeugung eines Magnetfelds angeordnet sind, insbesondere Permanentmagnete, bestrombare Spulen und/oder Kurzschlusswicklungen, welche mit Mitteln des Antriebs zur Erzeugung eines magnetischen/elektromagnetischen Drehfelds zusammenwirken, insbesondere mit mechanisch drehbaren Permanentmagneten, mechanisch drehbaren bestrombaren Spulen oder feststehenden bestrombaren Spulen. Wie bereits erwähnt können dadurch ein kontaktloser Antrieb für das Zellenrad realisiert und Probleme mit Undichtheiten der Zellenradschleuse vermieden werden.

Beispielsweise kann dazu ein Synchronantrieb für das Zellenrad ausgebildet werden. Dazu sind auf dem Zellenrad umfangsseitig Permanentmagnete / bestrombare Spulen angeordnet und mit mechanisch drehbaren Permanentmagneten / mechanisch drehbaren, bestrombaren Spulen oder feststehenden bestrombaren Spulen des Antriebs gekoppelt. Das heißt, dass außerhalb des Zellenradgehäuses ein magnetisches/elektromagnetisches Drehfeld erzeugt wird, das mit dem Rotorfeld wechselwirkt und somit das Zellenrad synchron mit der Drehzahl des Drehfelds mit dreht. Das Drehfeld kann dabei auf elektrisch/elektronischem Weg erzeugt werden, beispielsweise mit Hilfe eines Wechselrichters beziehungsweise Inverters. Die Statorspulen brauchen dann nicht mechanisch bewegt werden. Denkbar wäre aber auch, einen außenliegenden Zahnkranz/Reibkranz vorzusehen, wie das weiter oben ja schon erläutert wurde. Dieser Zahnkranz/Reibkranz ist mit Permanentmagneten oder Elektromagneten (Spulen) ausgestattet und erzeugt bei Drehung ein Drehfeld, mit dem sich das Zellenrad synchron mit dreht.

Denkbar ist aber auch, einen Asynchronantrieb für das Zellenrad auszubilden. Dazu wird in der schon oben beschriebenen Weise ein äußeres Drehfeld erzeugt, konkret mit mechanisch drehbaren Permanentmagneten / mechanisch drehbaren bestrombaren Spulen oder mit feststehenden bestrombaren Spulen im Zusammenwirken mit einem Wechselrichter/Inverter. Auf dem Zellenrad befinden sich jedoch keine Permanentmagnete oder Elektromagnete, sondern eine Kurzschlusswicklung. Durch das Drehfeld werden in den Kurzschlusswicklungen Kurzschlussströme induziert, welche wiederum ein Rotorfeld erzeugen, das mit dem äußeren Drehfeld interagiert. Auf diese Weise dreht sich das Zellenrad asynchron und mit etwas Schlupf langsamer mit dem Drehfeld mit. Anstatt eine dezidierte Kurzschlusswicklung vorzusehen, die beispielsweise in ein Material des Zellenrads eingebettet sein kann, kann auch direkt die Wirkung des Wirbelstroms für den Antrieb des Zellenrads genutzt werden, wenn dieses aus Metall besteht.

Günstig ist es, wenn der Zahnkranz, der Reibkranz beziehungsweise die Mittel zur Erzeugung eines Magnetfelds radial ausgerichtet ist/sind. Auf diese Weise benötigt die Zellenradschleuse in axialer Richtung nur wenig Bauraum.

Günstig ist es aber auch, wenn der Zahnkranz, der Reibkranz beziehungsweise die Mittel zur Erzeugung eines Magnetfelds axial ausgerichtet ist/sind. Auf diese Weise benötigt die Zellenradschleuse in radialer Richtung nur wenig Bauraum.

In einer weiteren günstigen Ausführungsform sind eine Einlassrichtung und eine Auslassrichtung im Wesentlichen parallel zur Drehachse des Zellenrads ausgerichtet. Das heißt, dass die Drehachse des Zellenrads im Betrieb im Wesentlichen vertikal ausgerichtet ist. Auf diese Weise kann die Zellenradschleuse relativ niedrig ausgeführt werden und braucht in vertikaler Ausdehnung nur wenig Bauraum. Zudem kann solcherart eine Zellenradschleuse mit hohem Durchsatz realisiert werden. Der Begriff "im Wesentlichen" bedeutet im gegebenen Zusammenhang insbesondere eine Winkelabweichung von bis zu +/- 10°.

In einer weiteren günstigen Ausführungsform sind eine Einlassrichtung und eine Auslassrichtung im Wesentlichen rechtwinkelig zur Drehachse des Zellenrads ausgerichtet. Das heißt, dass die Drehachse des Zellenrads im Betrieb im Wesentlichen horizontal ausgerichtet ist. Auf diese Weise kann die Zellenradschleuse relativ schmal ausgeführt werden und braucht in horizontaler Ausdehnung nur wenig Bauraum. Der Begriff "im Wesentlichen" bedeutet im gegebenen Zusammenhang wiederum insbesondere eine Winkelabweichung von bis zu +/-10°.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes schematisch dargestelltes Beispiel für eine Zellenradschleuse mit radial am Zellenrad angreifenden Stirnzahnrad;
- Fig. 2: ein weiteres schematisch dargestelltes Beispiel für ein Antriebskonzept mit radial am Zellenrad angreifenden Kronenrad;
- Fig. 3: wie Fig. 2, nur mit einer Schnecke anstelle des Kronenrads;
- Fig. 4: ein schematisch dargestelltes Beispiel für ein Antriebskonzept mit radial am Zellenrad angreifenden Reibrad;
- Fig. 5: wie Fig. 4, nur mit einer Hilfsleitung für den Bremssand;
- Fig. 6: ein schematisch dargestelltes Beispiel für ein Antriebskonzept mit einem Riementrieb für das Zellenrad;
- Fig. 7: ein Beispiel für ein Planetengetriebe zum Antrieb des Zellenrads;
- Fig. 8: ein schematisch dargestelltes Beispiel für ein Antriebskonzept mit einem außenliegenden Reibkranz, der in radialer Richtung magnetisch mit dem Zellenrad gekoppelt ist;
- Fig. 9: ähnlich wie Fig. 8, jedoch mit bestrombaren Spulen im Reibkranz;
- Fig. 10: ähnlich wie Fig. 9, jedoch mit bestrombaren Spulen auch im Zellenrad;
- Fig. 11: ähnlich wie Fig. 9, jedoch mit einem Kurzschlusskäfig im Zellenrad;
- Fig. 12: ein schematisch dargestelltes Beispiel für ein Antriebskonzept mit einem axial am Zellenrad angeordneten Zahnkranz;
- Fig. 13: ähnlich wie Fig. 8, jedoch mit axialer Ausrichtung der Permanentmagnete;
- Fig. 14: ähnlich wie Fig. 10, jedoch mit axialer Ausrichtung der bestrombaren Spulen;
- Fig. 15: ein Beispiel für eine Zellenradschleuse mit horizontaler Ausrichtung der Drehachse des Zellenrads;
- Fig. 16: eine beispielhafte und schematisch dargestellte Schnecke mit einem Bereich, in dem der Zahn/Gang der Schnecke aus einem Elastomer besteht;
- Fig. 17: ein Beispiel für ein druckluftbeaufschlagtes Getriebegehäuse und
- Fig. 18: ein schematisch dargestelltes Beispiel für eine Sandungsanlage in einem Schienenfahrzeug.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

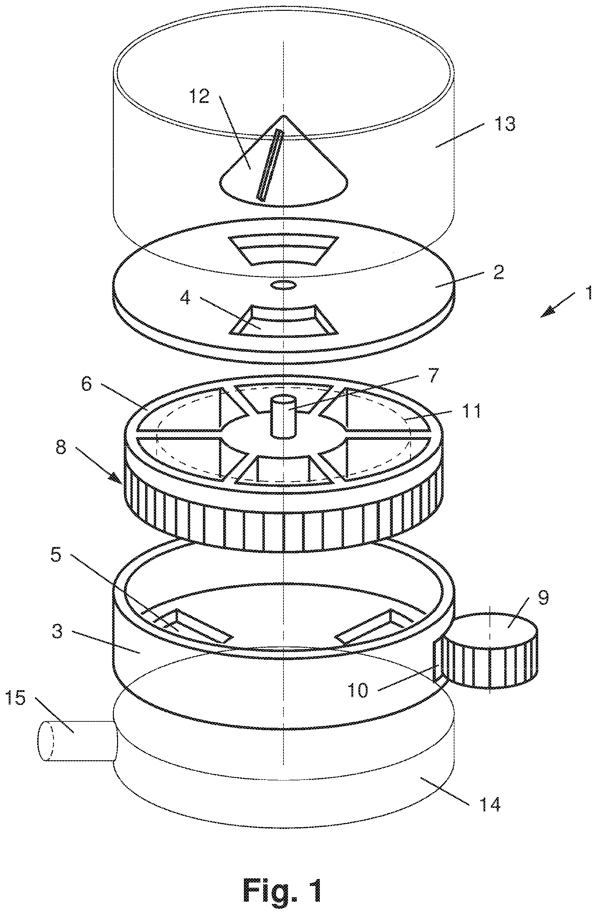

Fig. 1 zeigt eine schematische und beispielhafte Zellenradschleuse 1 in Explosionsdarstellung. Die Zellenradschleuse 1 umfasst ein Gehäuseoberteil 2 und ein Gehäuseunterteil 3, welche gemeinsam das Gehäuse der Zellenradschleuse 1 bilden. Im Gehäuseoberteil 2 sind zwei Einlässe 4, im Gehäuseunterteil 3 zwei dazu versetzte Auslässe 5 angeordnet. Die Zellenradschleuse 1 umfasst weiterhin ein Zellenrad 6, das in dem zwischen Gehäuseoberteil 2 und Gehäuseunterteil 3 eingeschlossenen Hohlraum mit Hilfe einer Welle 7 drehbar gelagert ist. Weiterhin umfasst die Zellenradschleuse 1 einen Antrieb für das Zellenrad 6, bei dem die Drehmomentübertragung zwischen dem Antrieb und dem Zellenrad 6 im Bereich eines Umfangs des Zellenrads 6 hergestellt ist. Konkret weist das Zellenrad 6 dazu einen umfangsseitig angeordneten Zahnkranz 8 auf, welcher mit einem Stirnzahnrad beziehungsweise Ritzel 9 zusammenwirkt, das über eine Ausnehmung 10 in das Gehäuse 2, 3 hineinragt und als Antriebselement des genannten Antriebs fungiert. Die Welle 7, mit deren Hilfe das Zellenrad 6 drehbar gelagert ist, ist dadurch im Wesentlichen frei von Antriebsmomenten, beziehungsweise überträgt lediglich ein von den Lagerkräften herrührendes Drehmoment sowie gegebenenfalls ein Drehmoment zu weiteren mit dem Zellenrad 6 gekoppelten Elementen.

Der Zahnkranz 8 ist in diesem Beispiel ganz außen auf dem Zellenrad 6 angeordnet. Generell ist es von Vorteil, wenn die Drehmomentübertragung auf das Zellenrad 6 in einem Bereich erfolgt, welcher außerhalb eines Mantels eines gedachten, mit dem Zellenrad 6 koaxialen Zylinders 11 liegt, dessen Durchmesser das 0,8-fache des maximalen Durchmessers des Zellenrads 6 beträgt (in der Fig. 1 strichliert eingezeichnet).

In dem in der Fig. 1 dargestellten Beispiel umfasst die Zellenradschleuse 1 noch einen optionalen Aktivator/Rührer 12, welcher in ein Zuführrohr beziehungsweise einen Schüttgutbehälter 13 hineinragt. Zusätzlich ist in der Fig. 1 auch noch ein Sammler 14 mit einem Abführrohr 15 dargestellt. Das Zuführrohr beziehungsweise der Schüttgutbehälter 13, der Sammler 14 und das Abführrohr 15 sind nicht unbedingt Teil der Zellenradschleuse 1 und deshalb mit dünnen Linien dargestellt.

Die Funktion der in der Fig. 1 dargestellten Zellenradschleuse 1 ist nun wie folgt.

Über das Zuführrohr / den Schüttgutbehälter 13 wird Bremssand an die Zellenradschleuse 1 herangeführt. Über die beiden Einlässe 4 dringt es in die Kammern des Zellenrads 6 vor, gelangt im Stillstand des Zellenrads 6 von dort aber nicht weiter. Wird das Zellenrad 6 in Rotation versetzt, so schieben die Zellenradflügel das in den Zellenradkammern befindliche Material zu den Auslässen 5, wo es hindurch in den Sammler 14 fällt und von dort über das Abführrohr 15 abtransportiert wird, beispielsweise mit Hilfe von Druckluft. Über den von der Welle 7 angetriebenen Aktivator/Rührer 12 wird verhindert, dass der Bremssand verklumpt. Dieser kann zu diesem Zweck wie dargestellt Rippen aufweisen, jedoch auch mit etwas weiter auskragenden Rührflügeln ausgestattet sein.

In dem in Fig. 1 dargestellten Beispiel weist das Gehäuse 2, 3 zwei Einlässe 4 und zwei Auslässe 5 auf. Weiterhin weist das Zellenrad 6 sechs Kammern auf. Selbstverständlich ist dies nur als illustratives Beispiel zu sehen. Natürlich kann die Zahl der Einlässe 4 und Auslässe 5 sowie der Kammern auch von der Darstellung abweichen. Zudem kann auch der Aktivator/Rührer 12 anders ausgebildet sein als dargestellt. Insbesondere kann ein Aktivator durch ein direkt ober dem Gehäuseoberteil 2 angeordnetes Flügelrad gebildet sein, welches den Bremssand in die Kammern des Zellenrads 6 befördert. Im speziellen kann ein solcher Aktivator auch mit einem (glatten) Kegel kombiniert werden. Ein Rührer kann insbesondere flügelartige Fortsätze oder Arme aufweisen, welche den Bremssand rühren und damit auflockern. Der Rührer und der Aktivator können einzeln oder in Kombination verbaut sein.

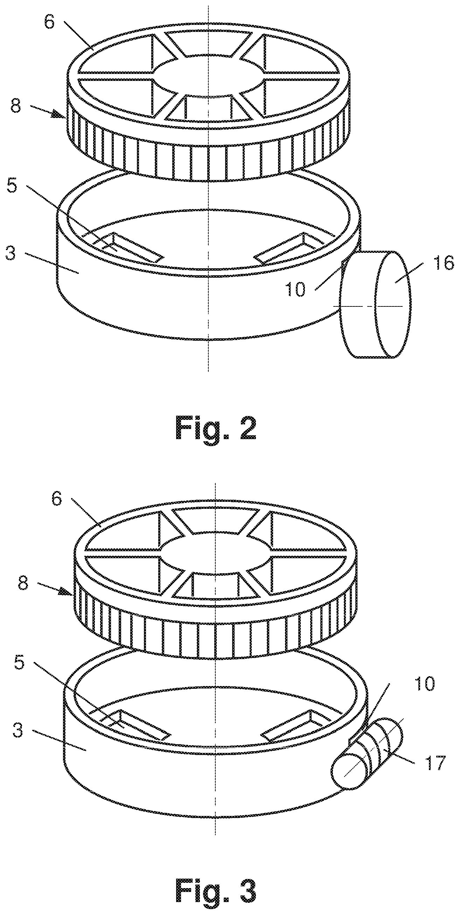

Fig. 2 zeigt nun ein Antriebskonzept, bei dem ein Kronenrad 16 mit dem Zahnkranz 8 zusammenwirkt. Die Zähne des Kronenrads 16 sind dem Zahnkranz 8 zugewandt und deswegen in der Fig. 2 nicht sichtbar. Denkbar ist auch, dass das Rad 16 als Ritzel ausgebildet ist und der Zahnkranz 8 eine Kronenverzahnung aufweist. Diese kann nach oben oder nach unten gerichtet sein. Des Weiteren sind in der Fig. 2 aus Gründen der Einfachheit lediglich das Gehäuseunterteil 3, das Zellenrad 6 und das Kronenrad 16 dargestellt. Diese vereinfachte Darstellung wird auch für die folgenden Figuren beibehalten. Die Verwendung eines Kronenrads 16 ermöglicht die winkelige Anordnung der Zellenradachse und der Kronenradachse. In ähnlicher Anordnung ist auch die Verwendung eines Kegelzahnrads für den Antrieb des Zellenrads 6 vorstellbar. Der Zahnkranz 8 ist dann dementsprechend kegelförmig auszuführen. In einer weiteren ähnlichen Anordnung ist auch die Verwendung eines Torus-Getriebes denkbar. In diesem Fall weist das Rad 16 eine stirnseitig angeordnete und spiralförmig verlaufende Verzahnung auf, welche mit dem Zahnkranz 8 zusammenwirkt. Dazu werden die Achsen des Rads 16 und des Zahnkranzes 8 leicht zueinander versetzt.

Vorteilhaft an der Anordnung nach Fig. 2 ist die Ausrichtung der Achsen des Rads 16 und des Zellenrads 6, welche einen Einbau eines Antriebsmotors in Längsrichtung eines Schienenfahrzeugs ermöglicht. In der Regel kann der Antriebsmotor in dieser Lage sehr gut in einem Schienenfahrzeug untergebracht werden, wohingegen die die Einbauverhältnisse in der Vertikalen sowie zur Mitte des Schienenfahrzeugs hin in der Regel beengter sind. Zudem kann der Motor in Fahrtrichtung des Schienenfahrzeugs hinter der Zellenradschleuse 1 angeordnet sein, sodass dieser gut vor Umwelteinflüssen geschützt ist. Insbesondere das Torus-Getriebe ermöglicht hohe Übersetzungen, sodass auf weitere Getriebestufen unter Umständen verzichtet werden kann. Dadurch kann ein sehr energieeffizienter Antrieb für das Zellenrad 6 realisiert werden. Solche Getriebe sind beispielsweise bei der Firma Tedec AG erhältlich (siehe auch http://torus-gear.com).

Fig. 3 zeigt weiterhin ein Antriebskonzept, bei dem eine Schnecke 17 mit dem Zahnkranz 8 zusammenwirkt. Dadurch ergibt sich eine vergleichsweise hohe Getriebeübersetzung und somit ein drehmomentstarker Antrieb für das Zellenrad 6. Eine ähnlich hohe Getriebeübersetzung wird auch mit einem Spiralrad eines Torus-Getriebes erreicht.

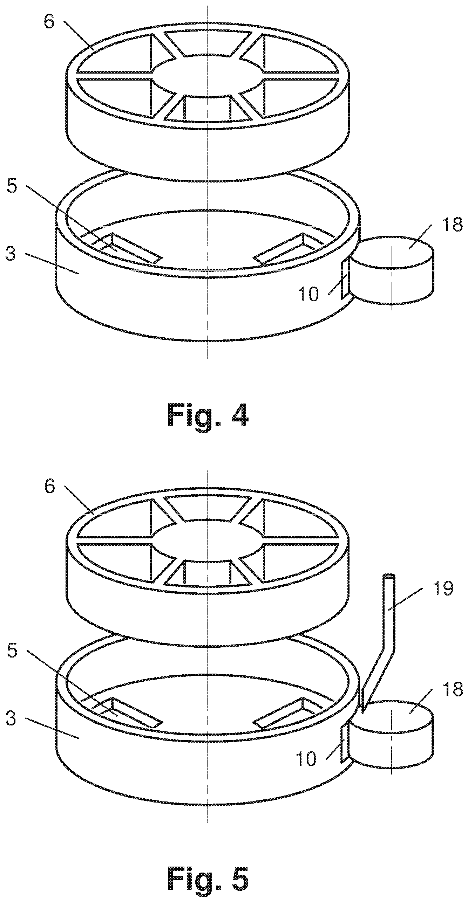

Fig. 4 zeigt nun ein Beispiel, bei dem auf dem Zellenrad 6 umfangsseitig ein Reibkranz angeordnet ist, welcher mit einem Reibrad 18 des Antriebs zusammenwirkt. Vorteilhaft treten bei einem Reibgetriebe keine Probleme mit Bremssand auf, der unerwünschterweise zum Antrieb gelangt. Der Bremssand kann sogar gezielt zu dem Reibgetriebe geführt werden. Fig. 5 zeigt dazu ein Beispiel mit einer Hilfsleitung 19, über welche der Bremssand an das Reibgetriebe herangeführt wird. Die Hilfsleitung 19 kann beispielsweise am Zuführrohr beziehungsweise Schüttgutbehälter 13 angeschlossen sein und einen Teil des Bremssands abzweigen.

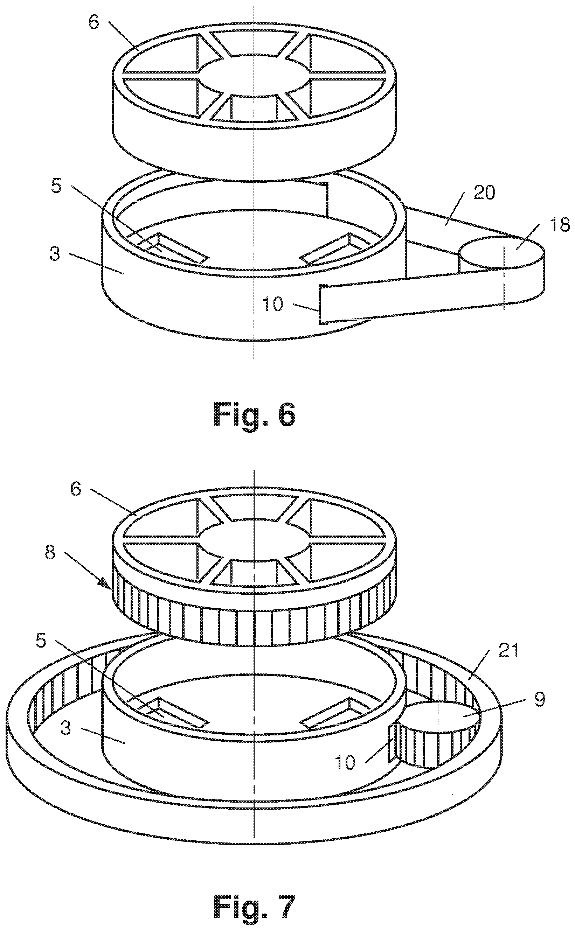

Fig. 6 zeigt ein Antriebskonzept, bei dem das Zellenrad 6 mit Hilfe eines Riemens 20 angetrieben wird, welcher über die Ausnehmungen 10 durch das Gehäuseunterteil 3 hindurch geführt ist. Als Riemen 20 können beispielsweise Flachriemen, Rundriemen, Keilriemen oder Keilrippenriemen eingesetzt werden. In ganz ähnlicher Form ist auch der Einsatz von Ketten oder Zahnriemen vorstellbar. Demgemäß ist dann ein Zahnkranz 8 auf dem Zellenrad 6 und ein passendes Antriebsrad vorzusehen. Auch der Einsatz einer Hilfsleitung 19 ist wiederum vorstellbar.

Fig. 7 zeigt eine Variante, bei der das mit dem Antrieb gekoppelte Stirnzahnrad 9 als Rad eines Planetengetriebes ausgebildet ist, und mit einem Hohlrad 21 zusammenwirkt. In der Fig. 7 weist das Planetengetriebe nur ein Planetenrad auf. Möglich ist natürlich auch, dass das Planetengetriebe mehr als ein Planetenrad aufweist. Weiterhin ist das Planetengetriebe als Zahnradgetriebe ausgeführt. Denkbar ist aber natürlich auch, dass dieses als Reibradgetriebe ausgeführt ist (vergleiche Fig. 4 und 5). Der Antrieb kann bei feststehendem Hohlrad über den Planetenträger erfolgen oder bei feststehendem Planetenträger über das Hohlrad. Vorstellbar ist weiterhin, dass das Zellenrad 6 nicht das Sonnenrad, sondern stattdessen das Hohlrad bildet. Der Antrieb kann dann dementsprechend bei feststehendem Sonnenrad über den Planetenträger erfolgen oder bei feststehendem Planetenträger über das Sonnenrad. Zudem ist auch vorstellbar, dass das Zellenrad 6 den Planetenträger bildet. Der Antrieb kann dann dementsprechend bei feststehendem Sonnenrad über das Hohlrad erfolgen oder bei feststehendem Hohlrad über das Sonnenrad.

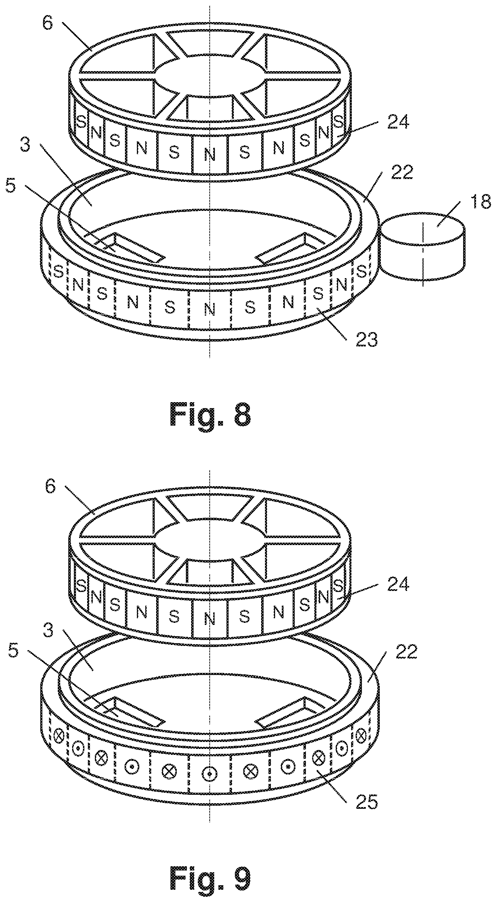

Fig. 8 zeigt nun ein Antriebskonzept, bei dem die Drehmomentübertragung zwischen Antrieb und Zellenrad 6 kontaktlos, insbesondere magnetisch beziehungsweise elektromagnetisch, durch das Gehäuseunterteil 3 hindurch erfolgt. Konkret ist in dem Beispiel dazu ein um das Gehäuseunterteil 3 drehbar gelagerter Reibkranz 22 vorgesehen, in dem mehrere Permanentmagnete 23 eingebettet sind. Im Zellenrad sind ebenfalls mehrere Permanentmagnete 24 eingebettet, wodurch die magnetische Kopplung zwischen Reibkranz 22 und Zellenrad 6 bewirkt wird. Wird der Reibkranz 22 in Drehung versetzt, was in dem in Fig. 8 dargestellten Beispiel mit Hilfe des Reibrads 18 erfolgt, so wird die Rotationsbewegung des Reibkranzes 22 mit Hilfe der Magnete 23 auf das Zellenrad 6 übertragen. Das Gehäuseunterteil 3 kann zu diesem Zweck (zumindest partiell) aus nicht magnetischem Material gefertigt sein, beispielsweise aus Kunststoff, Keramik oder einem Verbundmaterial. Auch das Zellenrad 6 kann ganz oder zum Teil aus diesen Materialien gefertigt sein.

In dem in Fig. 8 dargestellten Beispiel wird der Reibkranz 22 von einem Reibrad 18 angetrieben. Dies ist jedoch nicht die einzig denkbare Möglichkeit, sondern es stehen prinzipiell alle zum Direktantrieb des Zellenrads 6 offenbarten Varianten auch für den indirekten, kontaktlosen Antrieb zur Verfügung. Beispielsweise kann der Reibkranz 22 mit einem Riemen 20, beispielsweise einem Flachriemen, Rundriemen, Keilriemen oder Keilrippenriemen angetrieben werden (siehe auch Fig. 6). Selbstverständlich ist auch ein formschlüssiger Antrieb einsetzbar, wobei anstelle des Reibkranzes 22 ein Zahnkranz vorgesehen wird, welcher mit einem Antriebselement des Antriebs aus der Gruppe Stirnzahnrad 9, Kegelzahnrad, Kronenrad 16, Schnecke 17, Spiralrad eines Torus-Getriebes, Kette oder Zahnriemen zusammenwirkt. Auch ein Planetengetriebe ist prinzipiell vorstellbar (siehe auch Fig. 1 bis 7).

Fig. 9 zeigt nun ein zu Fig. 8 ähnliches Antriebskonzept, bei dem anstelle der Permanentmagneten 23 bestrombare Spulen 25 zur Erzeugung eines elektromagnetischen Felds vorgesehen sind. Prinzipiell kann der Kranz 22 wiederum drehbar gelagert und mechanisch angetrieben werden, so wie dies auch in dem in der Fig. 8 dargestellten Beispiel der Fall ist. Eine relativ elegante Lösung wird aber auch durch einen feststehenden Kranz 22 gebildet, bei dem eine elektronische Schaltung, konkret ein Inverter beziehungsweise Wechselrichter, die Spulen 25 derart ansteuert, dass ein elektromagnetisches Drehfeld entsteht. Auf diese Weise entsteht ein elektrischer, permanent erregter Synchronantrieb beziehungsweise "Brushless"-Antrieb. Selbstverständlich kann in einem Wechselstromnetz auch direkt ein Drehfeld, also ohne Wechselrichter/Inverter erzeugt werden. Auch ist vorstellbar, dass der Kranz 22 entfällt und die bestrombaren Spulen 25 stattdessen im Gehäuseunterteil 3 integriert sind.

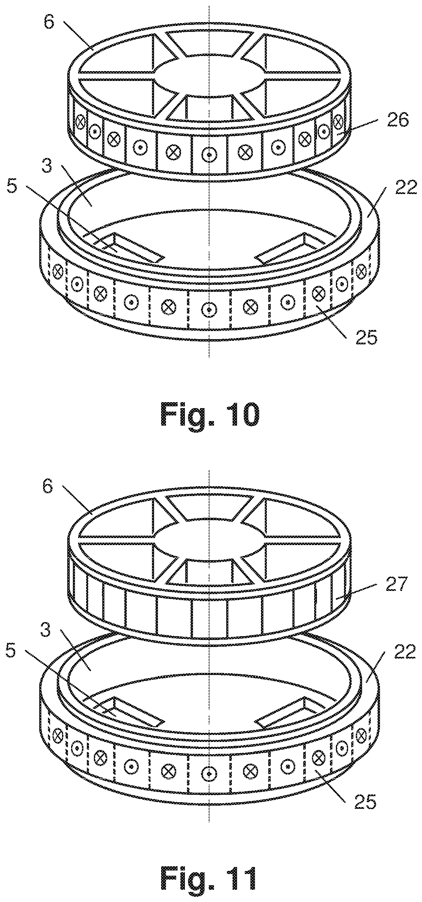

Fig. 10 zeigt eine etwas abgewandelte Form der Fig. 9, bei der anstelle der Permanentmagnete 24 auf dem Zellenrad 6 ebenfalls bestrombare Spulen 26 vorgesehen sind, mit denen ein elektromagnetisches Rotorfeld erzeugt werden kann. Auf diese Weise entsteht ein fremderregter Synchronantrieb. An dieser Stelle wird darauf hingewiesen, dass sich auch das Zellenrad 6 der Fig. 8 synchron mit dem Reibkranz 22 mittdreht und somit im Prinzip ebenfalls einen Synchronantrieb ausbildet.

Fig. 11 zeigt eine weitere ähnliche Ausführungsform, bei der auf dem Zellenrad 6 ein Kurzschlusskäfig 27 angeordnet ist. Wird durch den Kranz 22 ein Drehfeld erzeugt, sei es auf mechanischem oder elektrischem/elektronischem Weg, so werden im Kurzschlusskäfig 27 Kurzschlussströme induziert, die ihrerseits ein elektromagnetisches Feld erzeugen, das mit dem Drehfeld des Kranzes 22 interagiert. Auf diese Weise wird ein Asynchronantrieb ausgebildet. In der Fig. 11 wird das Drehfeld durch feststehende oder bewegte bestrombare Spulen 25 erzeugt. Denkbar ist aber auch, dass das Drehfeld durch mechanisch bewegte Permanentmagnete 23 erzeugt wird. Der Kurzschlusskäfig 27 kann in ein Material des Zellenrads 6 eingebettet sein. Als Material des Zellenrads 6 kann insbesondere wieder Keramik, Kunststoff oder ein Verbundmaterial vorgesehen sein. Grundsätzlich kann der Kurzschlusskäfig 27 aber auch weggelassen und direkt die Wirkung eines Wirbelstroms genutzt werden, wenn das Zellenrad 6 aus Metall besteht.

In den bisherigen Darstellungen waren der Zahnkranz 8 und der Reibkranz 22 beziehungsweise die Mittel zur Erzeugung eines Magnetfelds radial ausgerichtet. Weiterhin waren eine Einlassrichtung und eine Auslassrichtung der Einlässe 4 und der Auslässe 5 im Wesentlichen parallel zur Drehachse des Zellenrads 6 ausgerichtet. Dies ist jedoch keineswegs die einzig vorstellbare Möglichkeit. Denkbar ist vielmehr auch, dass der Zahnkranz 8 und der Reibkranz 22 beziehungsweise die Mittel zur Erzeugung eines Magnetfelds axial ausgerichtet sind.

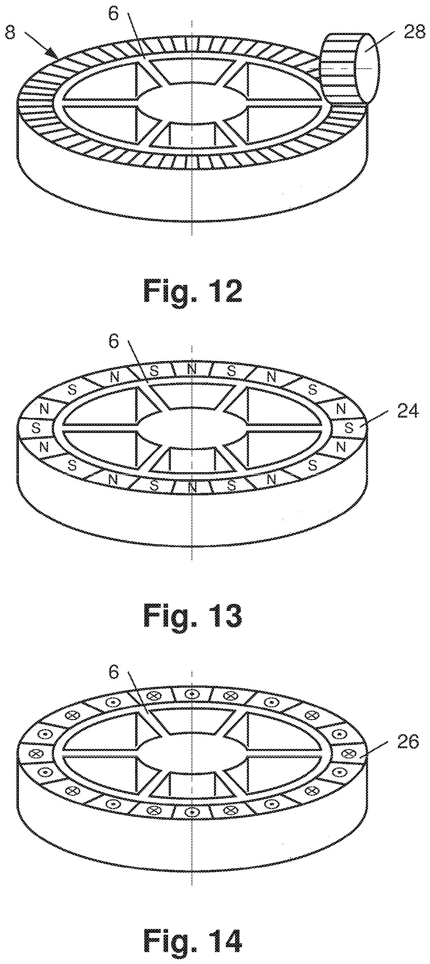

Fig. 12 zeigt dazu ein Beispiel, bei dem der Zahnkranz 8 axial ausgerichtet ist und mit einem Kegelzahnrad 28 zusammenwirkt. Anstelle des Zahnkranzes 8 könnte auch ein Reibkranz und anstelle des Kegelzahnrads 28 dementsprechend ein Kegelreibrad vorgesehen werden. Von Vorteil ist es wiederum, wenn die Drehmomentübertragung auf das Zellenrad 6 in einem Bereich erfolgt, welcher außerhalb eines Mantels eines gedachten, mit dem Zellenrad 6 koaxialen Zylinders liegt, dessen Durchmesser das 0,8-fache des maximalen Durchmessers des Zellenrads 6 beträgt (hier nicht explizit dargestellt, siehe jedoch Fig. 1).

Auch kontaktlose Antriebskonzepte sind bei axialer Ausrichtung der Mittel zur Erzeugung eines Magnetfelds uneingeschränkt anwendbar. Die Fig. 13 zeigt dazu ein Beispiel, bei dem Permanentmagnete 24 axial ausgerichtet sind, die Fig. 14 ein Beispiel, bei dem bestrombare Spulen 26 axial ausgerichtet sind. Auch ein Kurzschlusskäfig 27 wäre in axialer Ausrichtung vorstellbar.

An dieser Stelle wird angemerkt, dass in den Figuren 13 und 14 der Einfachheit halber jeweils nur das Zellenrad 6 dargestellt ist. Selbstverständlich werden für den Antrieb desselben Mittel zur Erzeugung eines magnetischen beziehungsweise elektromagnetischen Drehfelds benötigt. Diese Mittel können sinngemäß wie in den Figuren 8 bis 11 ausgeführt sein, jedoch mit dementsprechend axialer Ausrichtung.

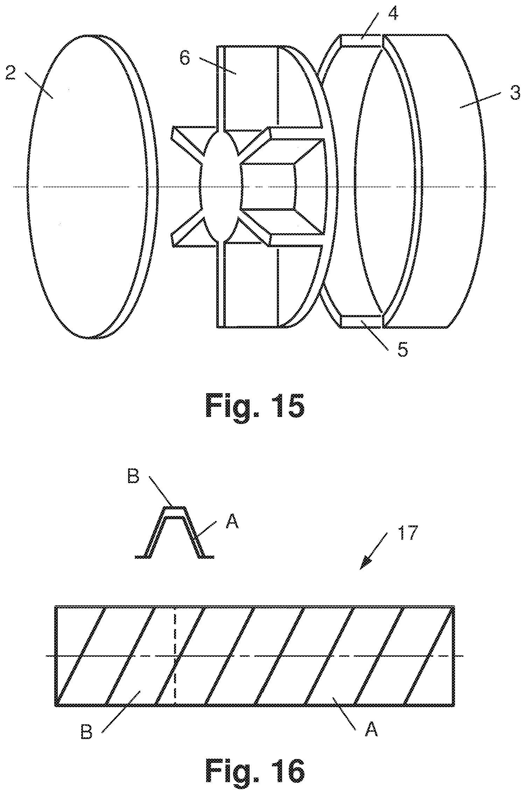

Fig. 15 zeigt nun eine Anordnung, bei der eine Einlassrichtung und eine Auslassrichtung im Wesentlichen rechtwinkelig zur Drehachse des Zellenrads 6 ausgerichtet sind. Für den Antrieb des Zellenrads 6 gilt das zu den Figuren 1 bis 14 Gesagte sinngemäß, wobei die zellenradseitigen Übertragungsmittel (Zahnkranz, Reibkranz, Permanentmagnete, bestrombare Spulen, Kurzschlusskäfig) auf dem kreisscheibenförmigen Teil des Zellenrads 6 angeordnet sind und wiederum radial oder axial ausgerichtet sein können. Die Drehmomentübertragung kann wiederum direkt oder kontaktlos erfolgen. Bei der direkten Drehmomentübertragung ist im rechten Teil des Gehäuseteils 3 ein entsprechender Ausschnitt vorzusehen. An dieser Stelle wird angemerkt, dass wegen des scheibenförmigen Abschnitts des Zellenrads 6 anstelle der Begriffe "Zahnkranz" und "Reibkranz" die Begriffe "Zahnrad" und "Reibrad" verwendet werden können.

Generell kann durch die kontaktlose Drehmomentübertragung vorteilhaft vermieden werden, dass der über die Zellenradschleuse 1 transportierte Bremssand an ein Getriebe des Antriebs gelangt. Kann eine Verschmutzung des Getriebes nicht völlig ausgeschlossen werden und ist das Antriebselement als ein- oder mehrgängige Schnecke 17 oder ein- oder mehrgängiges Spiralrad eines Torus-Getriebes ausgebildet, dann kann der Gang / können die Gänge der Schnecke 17 / des Spiralrads und/oder die Zähne des Zahnkranzes 8 je einen Endabschnitt aus einem Elastomer (z.B. Gummi, Silikonkautschuk) aufweisen, dessen Querschnitt im Vergleich zum Rest des jeweiligen Gangs/Zahns vergrößert ist. Fig. 16 zeigt an einem konkreten Beispiel einer Schnecke 17 was damit gemeint ist.

Die Schnecke 17 weist zwei verschiedene Bereiche A und B auf, wobei der Bereich A im Wesentlichen der Kraftübertragung dient und beispielsweise aus Metall gefertigt ist. Der Bereich B ist dagegen aus einem Elastomer gefertigt und dient der Säuberung des mit der Schnecke 17 in Eingriff stehenden Zahnkranzes 8. Der Zahn beziehungsweise Gang der Schnecke 17 ist dazu im Bereich B etwas größer als im Bereich A, um die erwähnte Säuberungswirkung zu erzielen. In ähnlicher Weise kann auch der Zahnkranz 8 beziehungsweise Spiralrad eines Torus-Getriebes mit einem Abschnitt B ausgestattet sein.

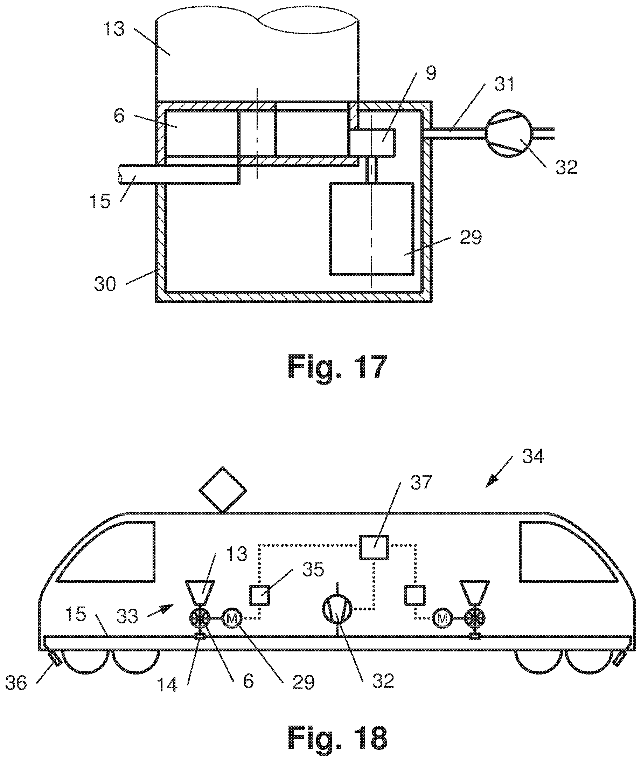

Ganz generell kann der Bremssand auch dadurch vom Antrieb ferngehalten werden, indem der Antrieb in einem Hohlraum angeordnet ist, welcher einen Druckluftanschluss aufweist. Fig. 17 zeigt dazu ein Beispiel, bei dem ein Antriebsmotor 29 samt Ritzel 9 in einem Gehäuse 30 angeordnet ist. Das Gehäuse 30 weist einen Druckluftanschluss 31 auf, welcher mit einem Kompressor 32 verbunden ist. Im Betrieb wird der durch das Gehäuse 30 gebildete Hohlraum druckluftbeaufschlagt, sodass der Luftdruck in diesem höher ist als in den Zellen des Zellenrads 6. Dadurch wird das Vordringen von Bremssand an den Antrieb erschwert oder sogar verhindert.

Fig. 18 zeigt schließlich eine beispielhafte Sandungsanlage 33 eines Schienenfahrzeugs 34. Die Sandungsanlage 33 umfasst eine Zellenradschleuse 1 mit einem Zellenrad 6, einen Sandbehälter 13, einen Sammler 14, einen Motor 29 sowie eine Steuerung 35. Der Sammler 14 ist an einen Kompressor 32 angeschlossen und auch mit einer Abführleitung 15 mit einem Fallrohr 36 verbunden. Im konkreten Beispiel umfasst das Schienenfahrzeug 34 zwei Sandungsanlagen 33, die mit einer zentralen Steuerung 37 verbunden sind.

Die Sandungsanlage 33 umfasst somit insbesondere einen mit dem Einlass 4 der Zellenradschleuse 1 verbundenen Behälter 13 zur Aufnahme von Bremssand (oder auch eine mit dem Einlass 4 der Zellenradschleuse 1 verbundenen Zuleitung zum Transport von Bremssand) und eine mit dem Auslass 5 der Zellenradschleuse 1 verbundenen Ableitung 15 zum Transport von Bremssand.

Bei einer Bremsung veranlasst die zentrale Steuerung 37 die Motorsteuerung 35 der Zellenradschleuse 33 zum Aktivieren des Motors 29 und damit zum Drehen des Zellenrads 6. Gleichzeitig wird auch der Kompressor 32 oder, sofern der Kompressor 32 ohnehin läuft, lediglich ein Magnetventil in der Druckluftleitung aktiviert. Dadurch wird Bremssand dosiert vom Behälter 13 zum Fallrohr 36 transportiert und fällt von dort vor die Räder des Schienenfahrzeugs 34, um die Traktion beim Bremsen und beim Anfahren zu erhöhen.

In einer vorteilhaften Ausführungsform umfasst die Sandungsanlage 33 eine Hilfsleitung 19, welche vom Sandbehälter 13 (respektive einer Zuleitung/Ableitung für Bremssand) zu einem Reibgetriebe zwischen Antrieb und Zellenrad 6 führt (siehe auch Fig. 5).

An dieser Stelle wird darauf hingewiesen, dass das Zellenrad 6 in der Fig. 18 der besseren Aussagekraft der schematischen Darstellung mit horizontal ausgerichteter Drehachse des Zellenrads 6 gezeichnet wurde. Selbstverständlich bezieht sich die Fig. 18 uneingeschränkt auch für Zellenräder mit vertikal ausgerichteter Drehachse und somit insbesondere auf die in den Figuren 1 bis 14 dargestellten Ausführungsformen. Dasselbe gilt sinngemäß auch für die Darstellung der Fig. 17.

Die Ausführungsbeispiele zeigen mögliche Ausführungsvarianten einer erfindungsgemäßen Sandungsanlage 33 sowie eines erfindungsgemäßen Schienenfahrzeugs, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

Insbesondere wird festgehalten, dass die dargestellten Vorrichtungen in der Realität auch mehr oder auch weniger Bestandteile als dargestellt umfassen können.

Der Ordnung halber sei abschließend darauf hingewiesen, dass zum besseren Verständnis des Aufbaus der Zellenradschleuse 1, der Sandungsanlage 33 sowie des Schienenfahrzeugs 34 diese/dieses bzw. deren/dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

**Bezugszeichenaufstellung**

| | | | |
|---|---|---|---|
| 1 | Zellenradschleuse | 21 | Hohlrad |
| 2 | Gehäuseoberteil | 22 | (Reib)kranz |
| 3 | Gehäuseunterteil | 23 | Permanentmagnet |
| 4 | Einlass | 24 | Permanentmagnet |
| 5 | Auslass | 25 | bestrombare Spule |
| | | | |
| 6 | Zellenrad | 26 | bestrombare Spule |
| 7 | Welle/Achse | 27 | Kurzschlusskäfig |
| 8 | (radialer) Zahnkranz | 28 | Kegelrad |
| 9 | Stirnrad | 29 | Antriebsmotor |
| 10 | Gehäuseausschnitt | 30 | Getriebegehäuse |
| | | | |
| 11 | gedachter Zylinder | 31 | Druckluftanschluss |
| 12 | Aktivator/Rührer | 32 | Kompressor/Verdichter |
| 13 | Behälter/Zuführrohr | 33 | Sandungsanlage |
| 14 | Sammler | 34 | Schienenfahrzeug |
| 15 | Abführrohr | 35 | Steuerung für Sandungsanlage |
| | | | |
| 16 | (Kronen)rad | 36 | Fallrohr |
| 17 | Schnecke | 37 | zentrale Steuerung |
| 18 | Reibrad | A | kraftübertragender Bereich |
| 19 | Hilfsleitung | B | elastischer Bereich |
| 20 | Riemen | | |

## Patentansprüche

1. Sandungsanlage (33) für ein Schienenfahrzeug (34), umfassend
- eine Zellenradschleuse (1) mit einem Gehäuse (2, 3), einem Einlass (4), einem Auslass (5), einem im Gehäuse (2, 3) drehbar gelagerten Zellenrad (6) und einem Antrieb für das Zellenrad (6),
- einen mit dem Einlass (4) der Zellenradschleuse (1) verbundenen Behälter (13) zur Aufnahme von Bremssand oder eine mit dem Einlass (4) der Zellenradschleuse (1) verbundene Zuleitung zum Transport von Bremssand und
- eine mit dem Auslass (5) der Zellenradschleuse (1) verbundene Ableitung (15) zum Transport von Bremssand,
**dadurch gekennzeichnet, dass**
die Drehmomentübertragung zwischen dem Antrieb und dem Zellenrad (6) im Bereich eines Umfangs des Zellenrads (6) hergestellt ist.

2. Sandungsanlage (33) nach Anspruch 1, **gekennzeichnet durch** eine Welle (7), mit deren Hilfe das Zellenrad drehbar gelagert ist und die im Wesentlichen drehmomentfrei ist.

3. Sandungsanlage (33) nach Anspruch 1 oder 2, **gekennzeichnet durch** einen auf dem Zellenrad (6) umfangsseitig angeordneten Zahnkranz (8), welcher mit einem Antriebselement des Antriebs aus der Gruppe Stirnzahnrad (9), Kegelzahnrad (28), Kronenrad (16), Schnecke (17), Spiralrad eines Torus-Getriebes, Kette oder Zahnriemen zusammenwirkt.

4. Sandungsanlage (33) nach Anspruch 1 oder 2, **gekennzeichnet durch** einen auf dem Zellenrad (6) umfangsseitig angeordneten Reibkranz, welcher mit einem Reibrad (18) oder Riemen (19) des Antriebs, insbesondere aus der Gruppe Flachriemen, Rundriemen, Keilriemen oder Keilrippenriemen, zusammenwirkt.

5. Sandungsanlage (33) nach Anspruch 1 oder 2, **dadurch gekennzeichnet, dass** die Drehmomentübertragung zwischen Antrieb und Zellenrad (6) kontaktlos, insbesondere magnetisch beziehungsweise elektromagnetisch, durch das Gehäuse (2, 3) hindurch erfolgt.

6. Sandungsanlage (33) nach Anspruch 5, **gekennzeichnet durch** einen drehbar gelagerten Zahnkranz oder ein drehbar gelagertes Zahnrad, der/das durch das Gehäuse (2, 3) hindurch magnetisch/elektromagnetisch mit dem Zellenrad (6) gekoppelt ist und mit einem Antriebselement des Antriebs aus der Gruppe Stirnzahnrad (9), Kegelzahnrad (28), Kronenrad (16), Schnecke (17), Spiralrad eines Torus-Getriebes, Kette oder Zahnriemen zusammenwirkt.

7. Sandungsanlage (33) nach Anspruch 3 oder 6, **dadurch gekennzeichnet, dass**
- das Antriebselement als ein- oder mehrgängige Schnecke (17) oder ein- oder mehrgängiges Spiralrad eines Torus-Getriebes ausgebildet ist und
- der Gang/die Gänge der Schnecke (17)/des Spiralrads und/oder die Zähne des Zahnkranzes (8) je einen Endabschnitt (B) aus einem Elastomer aufweisen, dessen Querschnitt im Vergleich zum Rest (A) des jeweiligen Gangs/Zahns vergrößert ist.

8. Sandungsanlage (33) nach Anspruch 5, **gekennzeichnet durch** einen drehbar gelagerten Reibkranz (22) oder ein drehbar gelagertes Reibrad der/das durch das Gehäuse (2, 3) hindurch magnetisch mit dem Zellenrad (6) gekoppelt ist und mit einem Reibrad (18) oder Riemen (19) des Antriebs, insbesondere aus der Gruppe Flachriemen, Rundriemen, Keilriemen oder Keilrippenriemen, zusammenwirkt.

9. Sandungsanlage (33) nach Anspruch 3, 4, 6 oder 8, **dadurch gekennzeichnet, dass** das mit dem Antrieb gekoppelte Stirnzahnrad (9)/Reibrad (18) als Rad eines Planetengetriebes ausgebildet ist.

10. Sandungsanlage (33) nach einem der Ansprüche 1 bis 9, **dadurch gekennzeichnet, dass** der Antrieb (9, 29) in einem Hohlraum angeordnet ist, welcher einen Druckluftanschluss (31) aufweist.

11. Sandungsanlage (33) nach einem der Ansprüche 5 bis 10, **gekennzeichnet durch** auf dem Zellenrad (6) umfangsseitig angeordnete Mittel zur Erzeugung eines Magnetfelds, insbesondere Permanentmagnete (24), bestrombare Spulen (26) und/oder Kurzschlusswicklungen (27), welche mit Mitteln des Antriebs zur Erzeugung eines magnetischen/elektromagnetischen Drehfelds zusammenwirken, insbesondere mit mechanisch drehbaren Permanentmagneten (23), mechanisch drehbaren bestrombaren Spulen oder feststehenden bestrombaren Spulen (25).

12. Sandungsanlage (33) nach Anspruch 11, **dadurch gekennzeichnet, dass** auf dem Zellenrad (6) umfangsseitig angeordnete Permanentmagnete (24) / bestrombare Spulen (26) und mit diesen gekoppelte mechanisch drehbare Permanentmagnete (23) / mechanisch drehbare bestrombare Spulen oder feststehende bestrombare Spulen (25) des Antriebs einen Synchronantrieb ausbilden.

13. Sandungsanlage (33) nach Anspruch 11, **dadurch gekennzeichnet, dass** auf dem Zellenrad (6) umfangsseitig angeordnete Kurzschlusswicklungen (27) und mechanisch drehbare Permanentmagnete (23) / mechanisch drehbare bestrombare Spulen oder feststehende bestrombare Spulen (25) des Antriebs einen Asynchronantrieb ausbilden.

14. Sandungsanlage (33) nach einem der Ansprüche 3 bis 13, **dadurch gekennzeichnet, dass** der Zahnkranz (8), der Reibkranz (22) beziehungsweise die Mittel (23..26) zur Erzeugung eines Magnetfelds radial ausgerichtet ist/sind.

15. Sandungsanlage (33) nach einem der Ansprüche 3 bis 13, **dadurch gekennzeichnet, dass** der Zahnkranz (8), der Reibkranz (22) beziehungsweise die Mittel (23..26) zur Erzeugung eines Magnetfelds axial ausgerichtet ist/sind.

16. Sandungsanlage (33) nach einem der Ansprüche 1 bis 15, **dadurch gekennzeichnet, dass** eine Einlassrichtung und eine Auslassrichtung im Wesentlichen parallel zur Drehachse des Zellenrads (6) ausgerichtet sind.

17. Sandungsanlage (33) nach einem der Ansprüche 1 bis 15, **dadurch gekennzeichnet, dass** eine Einlassrichtung und eine Auslassrichtung im Wesentlichen rechtwinkelig zur Drehachse des Zellenrads (6) ausgerichtet sind.

18. Sandungsanlage (33) nach einem der Ansprüche 1 bis 17, **gekennzeichnet durch** eine Hilfsleitung (19), welche von dem genannten Behälter (13) respektive der genannten Zuleitung/Ableitung (15) zu einem Reibgetriebe zwischen Antrieb und Zellenrad (6) führt.

19. Schienenfahrzeug (34), **gekennzeichnet durch** eine Sandungsanlage (33) nach einem der Ansprüche 1 bis 18.

## Claims

1. Sanding system (33) for a rail vehicle (34), comprising
a star feeder lock (1) with a housing (2, 3), an inlet (4), an outlet (5), a star feeder (6) rotatably mounted in the housing (2, 3) and a drive for the star feeder (6),
a container (13) connected to the inlet (4) of the star feeder lock (1) for the accommodation of braking sand or a supply line connected to the inlet (4) of the star feeder lock (1) for conveying braking sand, and
a discharge line (15) connected to the outlet (5) of the star feeder lock (1) for conveying braking sand,
**characterised in that**
the torque transmission between the drive and the star feeder (6) is established in the region of a circumference of the star feeder (6).

2. Sanding system (33) according to claim 1, **characterised by** a shaft (7), by means of which the star feeder is rotatably mounted and which is substantially free of torque.

3. Sanding system (33) according to claim 1 or 2, **characterised by** a ring gear (8) located on the circumference of the star feeder (6) and acting together with a drive element of the drive from the group of spur gear (9), bevel gear (28), crown wheel (16), worm (17), helical gear of a toroidal mechanism, chain or toothed belt.

4. Sanding system (33) according to claim 1 or 2, **characterised by** a friction rim located on the circumference of the star feeder (6) and acting together with a friction wheel (18) or a belt (19) of the drive, in particular from the group of flat belt, round-section belt, V-belt or poly-V-belt.

5. Sanding system (33) according to claim 1 or 2, **characterised in that** the torque between the drive and the star feeder (6) is transmitted without contact, in particular magnetically or electromagnetically, through the housing (2, 3).

6. Sanding system (33) according to claim 5, **characterised by** a rotatably mounted ring gear or a rotatably mounted gear which is magnetically/electromagnetically coupled to the start feeder (6) through the housing (2, 3) and acts together with a drive element of the drive from the group of spur gear (9), bevel gear (28), crown wheel (16), worm (17), helical gear of a toroidal mechanism, chain or toothed belt.

7. Sanding system (33) according to claim 3 or 6, **characterised in that**
the drive element is designed as a single- or multi-start worm (17) or as a multi-start helical gear of a toroidal mechanism, and
the flight(s) of the worm (17)/the helical gear and/or the teeth of the ring gear (8) each has an end section (B) made of an elastomer, the cross-section of which is increased compared to the rest (A) of the respective flight/tooth.

8. Sanding system (33) according to claim 5, **characterised by** a rotatably mounted friction rim (22) or a rotatably mounted friction wheel which is magnetically coupled to the star feeder (6) through the housing (2, 3) and acts together with a friction wheel (18) or belt (19) of the drive, in particular from the group of flat belt, round-section belt, V-belt or poly-V-belt.

9. Sanding system (33) according to claim 3, 4, 6 or 8, **characterised in that** the spur gear (9)/friction wheel (18) coupled to the drive is designed as a gear of a planetary gear mechanism.

10. Sanding system (33) according to any of claims 1 to 9, **characterised in that** the drive (9, 29) is located in a cavity having a pneumatic connection (31).

11. Sanding system (33) according to any of claims 5 to 10, **characterised by** means for generating a magnetic field located on the circumference of the star feeder (6), in particular permanent magnets (24), energisable coils (26) and/or short-circuited windings (27), which act together with means of the drive for generating a magnetic/ electromagnetic rotary field, in particular with mechanically rotatable permanent magnets (23), mechanically rotatable energisable coils or stationary energisable coils (25).

12. Sanding system (33) according to claim 11, **characterised in that** permanent magnets (24)/energisable coils (26) located on the circumference of the star feeder (6) and mechanically rotatable permanent magnets (23)/mechanically rotatable energisable coils or stationary energisable coils (25) of the drive coupled thereto form a synchronous drive.

13. Sanding system (33) according to claim 11, **characterised in that** short-circuited windings (27) located on the circumference of the star feeder (6) and mechanically rotatable permanent magnets (23)/mechanically rotatable energisable coils or stationary energisable coils (25) of the drive form an asynchronous drive.

14. Sanding system (33) according to any of claims 3 to 13, **characterised in that** the ring gear (8), the friction rim (22) or the means (23, 26) for generating a magnetic field are oriented radially.

15. Sanding system (33) according to any of claims 3 to 13, **characterised in that** the ring gear (8), the friction rim (22) or the means (23, 26) for generating a magnetic field are oriented axially.

16. Sanding system (33) according to any of claims 1 to 15, **characterised in that** an inlet direction and an outlet direction are oriented substantially parallel to the axis of rotation of the star feeder (6).

17. Sanding system (33) according to any of claims 1 to 15, **characterised in that** an inlet direction and an outlet direction are oriented substantially perpendicular to the axis of rotation of the star feeder (6).

18. Sanding system (33) according to any of claims 1 to 17, **characterised by** an auxiliary line (19), which leads from the said container (13) of the said respective supply line/discharge line (15) to a friction mechanism between the drive and the star feeder (6).

19. Rail vehicle (34), **characterised by** a sanding system (33) according to any of claims 1 to 18.

## Revendications

1. Installation (33) de sablage pour un véhicule (34) ferroviaire, comprenant
- une fermeture (1) rotative, ayant une enveloppe (2, 3), une entrée (4), une sortie (5), une roue (6) cellulaire montée tournante dans l'enveloppe (2, 3) et un entraînement de la roue (6) cellulaire,
- un récipient (13) communiquant avec l'entrée (4) de la fermeture (1) rotative pour recevoir du sable de freinage ou un conduit d'apport communiquant avec l'entrée (4) de la fermeture (1) rotative pour transporter du sable de freinage et
- un conduit (5) d'évacuation communiquant avec la sortie (5) de la fermeture (1) rotative, afin de transporter du sable de freinage,
**caractérisée en ce que**
la transmission du couple entre l'entraînement et la roue (6) cellulaire est produit dans la région d'un pourtour de la roue (6) cellulaire.

2. Installation (33) de sablage suivant la revendication 1, **caractérisée par** un arbre (7) à l'aide duquel la roue cellulaire est montée tournante et qui est sensiblement sans couple.

3. Installation (33) de sablage suivant la revendication 1 ou 2, **caractérisée par** une couronne (8) dentée, qui est montée du côté du pourtour sur la roue (6) cellulaire et qui coopère avec un élément d'entraînement de l'entraînement choisi dans le groupe roue (9) à denture droite, roue (28) à denture conique, roue (16) couronne, vis (17), roue spirale d'un entraînement torique, chaîne ou courroie dentée.

4. Installation (33) de sablage suivant la revendication 1 ou 2, **caractérisée par** une couronne de friction, qui est montée du côté du pourtour sur la roue (6) cellulaire et qui coopère avec une roue (18) de friction ou une courroie (19) de l'entraînement, notamment choisie dans le groupe des courroies plates, des courroies rondes, des courroies trapézoïdales ou des courroies trapézoïdales à nervures.

5. Installation (33) de sablage suivant la revendication 1 ou 2, **caractérisée en ce que** la transmission de couple entre l'entraînement et la roue (6) cellulaire s'effectue sans contact, notamment magnétiquement ou électromagnétiquement, à travers l'enveloppe (2, 3).

6. Installation (33) de sablage suivant la revendication 5, **caractérisée par** une couronne dentée montée tournante ou par une roue dentée montée tournante, qui est couplée à travers l'enveloppe (2, 3), magnétiquement/électromagnétiquement, à la roue (6) cellulaire et qui coopère avec un élément de l'entraînement choisi dans le groupe roue (9) à denture droite, roue (28) à denture conique, roue (16) couronne, vis (17), roue spirale d'un entraînement torique, chaîne ou courroie dentée.

7. Installation (33) de sablage suivant la revendication 3 ou 6, **caractérisée en ce que**
- l'élément d'entraînement est constitué sous la forme d'une vis (17) à un pas ou à plusieurs pas, ou d'une roue spirale à un pas ou à plusieurs pas, ou d'un entraînement conique et
- le pas/les pas de la vis (17)/la roue spirale et/ou les dents de la roue (8) dentée ont chacun une partie (B) d'extrémité en un élastomère, dont la section transversale est plus grande que le reste (A) du pas/dent respectif.

8. Installation (33) de sablage suivant la revendication 5, **caractérisée par** une couronne (22) de friction montée tournante ou par une roue de friction montée tournante, qui est couplée à travers l'enveloppe (2, 3) magnétiquement à la roue (6) cellulaire et comprenant une roue (18) de friction ou une courroie (19) de l'entraînement, notamment choisie dans le groupe des courroies plates, des courroies rondes, des courroies trapézoïdales ou des courroies trapézoïdales à nervures.

9. Installation (33) de sablage suivant la revendication 3, 4, 6 ou 8, **caractérisée en ce que** la roue (9) dentée droite/la roue (18) de friction couplée à l'entraînement est constituée sous la forme d'une roue d'un entraînement épicycloïdal.

10. Installation (33) de sablage suivant l'une des revendications 1 à 9, **caractérisée en ce que** l'entraînement (9, 29) est disposé dans une cavité, qui a un raccord (31) pour de l'air comprimé.

11. Installation (33) de sablage suivant l'une des revendications 5 à 10, **caractérisée par** des moyens disposés du côté du pourtour sur la roue (6) cellulaire pour produire un champ magnétique, notamment des aimants (24) permanents, des bobines (26) pouvant être alimentées en courant et/ou des enroulements (27) de court-circuit, qui coopèrent avec des moyens de l'entraînement pour produire un champ tournant magnétique/électromagnétique, notamment avec des aimants (23) permanents pouvant tourner mécaniquement, des bobines pouvant être alimentées en courant et pouvant tourner mécaniquement ou des bobines (25) fixes pouvant être alimentées en courant.

12. Installation (33) de sablage suivant la revendication 11, **caractérisée en ce que** des aimants (24) permanents/des bobines (26) pouvant être alimentées en courant, disposées du côté du pourtour sur la roue (6) cellulaire et des aimants (23) permanents pouvant tourner mécaniquement/des bobines pouvant être alimentées en courant et pouvant tourner mécaniquement ou des bobines (25) fixes pouvant être alimentées en courant de l'entraînement, ces aimants ou bobines pouvant être couplés aux aimants (24) et aux bobines (26) constituent un entraînement synchrone.

13. Installation (33) de sablage suivant la revendication 11, **caractérisée en ce que** des enroulements (27) de court-circuit, montés du côté du pourtour sur la roue (6) cellulaire et des aimants (23) permanents pouvant tourner mécaniquement/des bobines pouvant être alimentées en courant et pouvant tourner mécaniquement ou des bobines (25) fixes pouvant être alimentées en courant de l'entraînement, constituent un moteur asynchrone.

14. Installation (33) de sablage suivant l'une des revendications 3 à 13, **caractérisée en ce que** la couronne (8) dentée, la couronne (22) de friction ou les moyens (23..26) de production d'un champ magnétique est/sont dirigés radialement.

15. Installation (33) de sablage suivant l'une des revendication 3 à 13, **caractérisée en ce que** la couronne (8) dentée, la couronne (22) de friction ou les moyens (23..26) de production d'un champ magnétique est/sont dirigé(s) axialement.

16. Installation (33) de sablage suivant l'une des revendications 1 à 15, **caractérisée en ce qu'**une direction d'entrée et une direction de sortie sont dirigées sensiblement parallèlement à l'axe de rotation de la roue (6) cellulaire.

17. Installation (33) de sablage suivant l'une des revendications 1 à 15, **caractérisé en ce qu'**une direction d'entrée et une direction de sortie sont dirigées sensiblement par angle droit avec l'axe de rotation de la roue (6) cellulaire.

18. Installation (33) de sablage suivant l'une des revendications 1 à 17, **caractérisée en ce qu'**un conduit (19) auxiliaire, qui va dudit récipient (13), respectivement, au dit conduit d'apport/conduit d'évacuation (15) à un entraînement de friction entre l'entraînement et la roue (6) cellulaire.

19. Véhicule (34) ferroviaire, **caractérisé par** une installation (33) de sablage suivant l'une des revendications 1 à 18.
